(19) 

Europäisches
Patentamt

European
Patent Office

Office européen
des brevets

(11) **EP 4 769 244 A1**

(12) **EUROPEAN PATENT APPLICATION**

(43) Date of publication:
**01.07.2026 Bulletin 2026/27**

(21) Application number: **25226974.1**

(22) Date of filing: **23.12.2025**

(51) International Patent Classification (IPC):
**G06N 10/60** (2022.01) **G06N 3/084** (2023.01)
**G06N 3/045** (2023.01)

(52) Cooperative Patent Classification (CPC):
**G06N 3/084; G06N 10/60;** G06N 3/045

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **31.12.2024 EP 24383490**

(71) Applicant: **Multiverse Computing, S.L.**
**20014 Donostia - San Sebastian (ES)**

(72) Inventors:
• **Orus, Roman**
**20014 Donostia - San Sebastián (ES)**
• **Mugel, Samuel**
**Toronto, M5C 2T2 (CA)**
• **Aizpurua, Borja**
**20014 Donostia - San Sebastián (ES)**

(74) Representative: **Sonnenberg Harrison Partners**
**48, rue Saint-Honoré**
**75001 Paris (FR)**

(54) **QUANTUM STOCHASTIC GRADIENT DESCENT**

(57) A computer-implemented method for training a machine learning model (27) using a training dataset (28) having a set of distributional parameters $\theta$ is disclosed. The method comprises selecting (S205) a subset (28a) from the training dataset (28), calculating a gradient of the subset (28a) by encoding (S210) a cost function representative of the gradient into a quantum circuit, amplifying (S220) the amplitude of the quantum circuit, constructing a likelihood function (S230), and minimising the cost function in a variational quantum circuit to optimise the distributional parameters, extracting the optimised distributional parameters, and entering the optimised distributional parameters into the machine learning model (27).

```
┌─────────────────┐   ┌─────────────────┐   ┌─────────────────┐
│ S200 Aacquisition│   │ S205 Select     │   │ S210 Encode into│
│ of training set  │──▶│ subset          │──▶│ quantum circuit │
└─────────────────┘   └─────────────────┘   └─────────────────┘
                                                      │
                                                      ▼
┌─────────────────┐   ┌─────────────────┐   ┌─────────────────┐
│ S220 Quantum    │   │ S230 Construct  │   │ S240 Evaluating │
│ amplficiation   │──▶│ likelihood      │──▶│ the cost        │
│                 │   │ function        │   │ function        │
└─────────────────┘   └─────────────────┘   └─────────────────┘
        │
        ▼
┌─────────────────┐   ┌─────────────────┐
│ S250 Extracting │   │ S260 Using      │
│ oprimised       │   │ optimised       │
│ distributional  │──▶│ distributional  │
│ parameters      │   │ parameters in   │
│                 │   │ the ML model    │
└─────────────────┘   └─────────────────┘
```

Fig 2

EP 4 769 244 A1

**Description**

CROSS-REFERENCE TO RELATED APPLICATIONS

This application claims priority to European Patent Application No. 24383490.0 filed on 31 December 2024, the contents of which are incorporated herein by reference.

FIELD OF THE INVENTION

The field of the invention relates to a computer-implemented method and a system for determining parameters of a neural network, such as a large language model.

BACKGROUND OF THE INVENTION

Training a neural network is essentially an optimization procedure that involves determining parameters in the neural network that minimize a loss function. The loss function is the function that compares the target (or known) output values with the predicted output values. The object of the training is to minimize the loss (or difference) between the target output values and the predicted output values. The parameters in the neural network are adjusted to minimise the loss function so that the predicted output values are closer to the target output.

Deep-learning models implemented as neural networks require massive datasets and many model parameters in the neural network need to be tuned. With currently evolving applications of artificial intelligence, it is challenging to find an optimal method to handle the massive amounts of data with reasonable computing cost by reducing the amount of resources required.

The problem of computing a gradient of an expectation function has emerged recently as a tool in the advancement of the state of the art in the computational sciences. Known examples of the applications of computing the gradient of the computational sciences include management of supply-chains, pricing and hedging of financial derivatives, control of traffic lights, as well as in artificial intelligence, machine learning models, natural language processing, visual data processing and voice and audio processing.

Stochastic gradient descent (SGD) is known to be a simple and effective optimization algorithm which has been used in machine learning to minimize the cost function or the error function of a large-scale model with millions of parameters, represented by $\theta$. The stochastic gradient descent can also be used for updating online learning models in which new data is continuously added to the online learning model, and the online learning model needs to be updated in substantially real-time. The SGD can process the training data in small batches or individual data points instead of the entire dataset at once.

SGD works by optimizing a cost function $J(\theta)$ with suitable smoothness properties (e.g., differentiable, or subdifferentiable). The goal of SGD is to find a configuration of the parameters in the model that minimizes this cost function. The SGD does not use the actual gradient (which is calculated from the entire dataset used in training the model). SGD estimates the gradient using a randomly selected subset of the data in the dataset. The use of the selected subset is able to reduce the computational burden on the computing resources and therefore enables faster iterations but potentially slower convergence.

The general formula for updating the model parameters $\theta$ in the SGD is given by:

$$\theta = \theta - \alpha * \nabla J(\theta) \quad \text{(Eqn. 1)}$$

in which $\alpha$ represents the learning rate and $\nabla J(\theta)$ represents the gradient of the cost function $J(\theta)$ with respect to the model parameters $\theta$. The gradient represents the direction of steepest descent and is calculated as follows:

$$\nabla J(\theta) = \sum(x, y) \in B \nabla L\big(y, f(X; \theta)\big) \quad \text{(Eqn. 2)}$$

B represents a mini-batch of training examples (i.e. the subset of the data), x and y are the input variables and the target variables, $f(X; \theta)$ is the predicted output of the model for the input variable x and the current set of parameters $\theta$, and $VL(y, f(X; \theta)$ is the gradient of the loss function L with respect to the predicted output and the target variable y.

The SGD is iterative. In each iteration, the SGD updates the model parameters $\theta$ based on the estimated gradient. A setting, termed "step size" (or learning rate) determines the size of the update. The learning rate $\alpha$ determines the step size of the parameter update and needs to be chose to balance convergence speed, i.e. use of computing resources, and stability. A slow learning rate will lead to a slow convergence with extensive use of computing resources, and a large learning rate can cause the SGD algorithm to overshoot the global minimum and oscillate around the global minimum.

The computation of the stochastic gradient remains challenging and still requires a high computational burden. SGD has also several known limitations. For example, the SGD tends to converge to sub-optimal solutions, and the parameters of the learning model have to be carefully selected.

One way to accelerate the computation of the stochastic gradient is to use a hybrid quantum classical system with a classical processor and a quantum processor. The use of such a hybrid quantum-classical optimisation method for calculating the stochastic gradient is disclosed, for example, in Sweke et al, "Stochastic gradient descent for hybrid quantum-classical optimization", 18 August 2020, ArXiv.Org, 1910.01155v2. The authors disclose that, within the context of hybrid quantum-classical optimization, gradient descent-based optimizers typically require the evaluation of expectation values with respect to the outcome of parameterized quantum circuits. The authors explore the consequences of the prior observation that estimation of these quantities on quantum hardware results in a form of stochastic gradient descent optimization and the authors formalize this notion. This allows the authors to demonstrate that, in many relevant cases, including VQE, QAOA and certain quantum classifiers, estimating expectation values with k measurement outcomes results in optimization algorithms whose convergence properties can be rigorously well understood, for any value of k. It is reported that even using single measurement outcomes for the estimation of expectation values is sufficient. Moreover, in many settings the required gradients can be expressed as linear combinations of expectation values - originating, e.g., from a sum over local terms of a Hamiltonian, a parameter shift rule, or a sum over data-set instances - and the authors show that in these cases k-shot expectation value estimation can be combined with sampling over terms of the linear combination, to obtain "doubly stochastic" gradient descent optimizers.

Another tool for gradient estimation for optimizing large learning models is a Monte Carlo estimator. The Monte Carlo estimator is described, for example, by Shakir Mohamed et al "Monte Carlo Gradient Estimation in Machine Learning", Journal of Machine Learning Research 21 (2020). A computation of a general probabilistic objective $\mathcal{F}(\theta)$ is presented in the form of a mean-value analysis:

$$\mathcal{F}(\boldsymbol{\theta}) := \int p(\mathbf{x}; \boldsymbol{\theta}) f(\mathbf{x}; \boldsymbol{\phi}) \mathrm{d}\mathbf{x} \qquad \text{(Eqn. 3)}$$

A function f(x) of an input variable x having structural parameters $\phi$ is evaluated on average with respect to an input distribution p(x; $\theta$) with distributional parameters $\theta$. The input variable x is multidimensional real-world data. In this equation, f is the cost function (also termed an objective function), and $p(x; \theta)$ is a measure and $dx$ is a training data. The distributional parameters $\theta$ are very large parameters, for example in form of multidimensional vectors. To calculate the distributional parameters $\theta$, the gradient function is used:

$$\tilde{\eta} = \nabla_\theta \mathbb{E}_{p(x,\theta)}[f(x)] = \mathbb{E}_{p(x,\theta)}[f(m)\nabla_\theta \log p(x, \theta] \qquad \text{(Eqn.4)}$$

where $\nabla_\theta \log p(x, \theta)$ is the Monte Carlo gradient estimate.

Eqn. 4 is the sensitivity analysis of the function f or, in other words, the gradient of the expectation with respect to the distributional parameters q. When the evaluation of the cost function starts, the distributional parameters $\theta$ are fixed values and subsequently the distributional parameters $\theta$ are slightly changed for all possible values of $p(x; \theta)$, $f(x)$, $\theta$ and their combinations. The possible values are, for example, chosen randomly and termed initial guesses. It is observed if the $\mathcal{F}(\theta)$ is getting smaller or bigger. The goal of this estimation is to find a global minimum of $\mathcal{F}(\theta)$.

One known issue with this approach is that the Monte Carlo estimator may find a local minimum instead of a true global minimum. This issue can be overcome by increasing the amount of computational time to find the global minimum and thus increase the computational burden. The computation burden can be significant since, for a large data set, a number of the dimensions can be of the order of tens of thousands.

Methods to speed up the Monte-Carlo algorithm are known. For example, Montanaro, "Quantum Speedup of Monte Carlo methods", arXiv:1504.06987v3 [quant-ph], accessible at https://doi.org/10.48550/arXiv.1504.06987 (accessed on 22 April 2024), teaches a quantum algorithm which can accelerate Monte Carlo methods.

SUMMARY OF THE INVENTION

This document provides a method to accelerate the determination of the parameters in the model, by computing of the stochastic gradient using a quantum method. The method enables accelerating processing and increasing an accuracy of computing the stochastic gradient descent, as well as reducing the computational burden.

The method proposes to use of amplitude amplification and maximum-likelihood evaluation to determine the gradient descent.

The Sweke et al paper does not disclose the use of amplitude amplification and maximum-likelihood evaluation to determine the gradient descent.

The invention also proposes a computing system for training a machine learning model, comprising a classical processor and a quantum processor, wherein the classical processor is adapted to select a subset from a training dataset and to update distributional parameters $\theta$ in the machine learning model; and the quantum processor is adapted to map the subset into a plurality of quantum states $|\Psi\rangle$, to calculate a gradient of the subset by encoding a cost function representative of the gradient into a quantum circuit the amplitude of the quantum states $|\Psi\rangle$, to construct a likelihood function ), and to minimise the cost function in a variational quantum circuit in order to optimise the distributional parameters $\theta$.

This document teaches a computer-implemented method for training a machine learning model using a training dataset, having a set of distributional parameters, the method being implemented on a hybrid classical-quantum system with a classical processor and a quantum processor. The method comprises inputting a subset from the training dataset, mapping the subset into quantum states, calculating a gradient of the subset by encoding a cost function representative of the gradient into a variational quantum circuit implemented on the quantum processor, amplifying the amplitude of the quantum states, constructing a likelihood function, and minimising the cost function by the variational quantum circuit to optimise the distributional parameters, extracting the optimised distributional parameters, and entering the optimised distributional parameters into the machine learning model.

In one aspect, the subset may be selected stochastically (at random) using the classical processor.

The variational quantum circuit evaluates the cost function to optimise the distributional parameters. This is done, for example, by measuring the outcomes of the variational quantum circuit, processing the outcomes statistically in the classical processor to compute classical quantities, and using the computed classical quantities to optimise the distributional parameters.

It will be appreciated that the amplifying may be repeated a plurality of times and, in one aspect, the number of times for repeating the amplifying is the inverse of the square root of the probabilities. The amplifying is carried out, for example, by applying, in the quantum processor, a unitary operator on the quantum circuit.

In an aspect, a single likelihood function is constructed from multiple likelihood functions after performing an amplitude amplification/estimation algorithm.

A computing system for training a machine learning model is also disclosed. The computing system comprises a classical processor and a quantum processor. The classical processor is adapted to select a subset from a training dataset and to update distributional parameters $\theta$ in the machine learning model. The quantum processor is adapted to map the subset into a plurality of quantum states, to calculate a gradient of the subset by encoding a cost function representative of the gradient into a quantum circuit, to amplify the amplitude of the quantum states, to construct a likelihood function, and to minimise the cost function in a variational quantum circuit in order to optimise the distributional parameters.

A computer-program product which on running on a hybrid classical-quantum computer system is configured to run the method.

DESCRIPTION OF THE FIGURES

Fig. 1 shows an overview of a computing system used to implement this method.
Fig. 2 shows a flow diagram of the method.
Fig. 3A-3C illustrate quantum amplification.
Fig. 4 illustrates maximum likelihood estimation.
Fig. 5 illustrates a variational quantum circuit.

DETAILED DESCRIPTION OF THE INVENTION

The invention will now be described on the basis of the drawings. It will be understood that the embodiments and aspects of the invention described herein are only examples and do not limit the protective scope of the claims in any way. The invention is defined by the claims and their equivalents. It will be understood that features of one aspect or embodiment of the invention can be combined with a feature of a different aspect or aspects and/or embodiments of the invention.

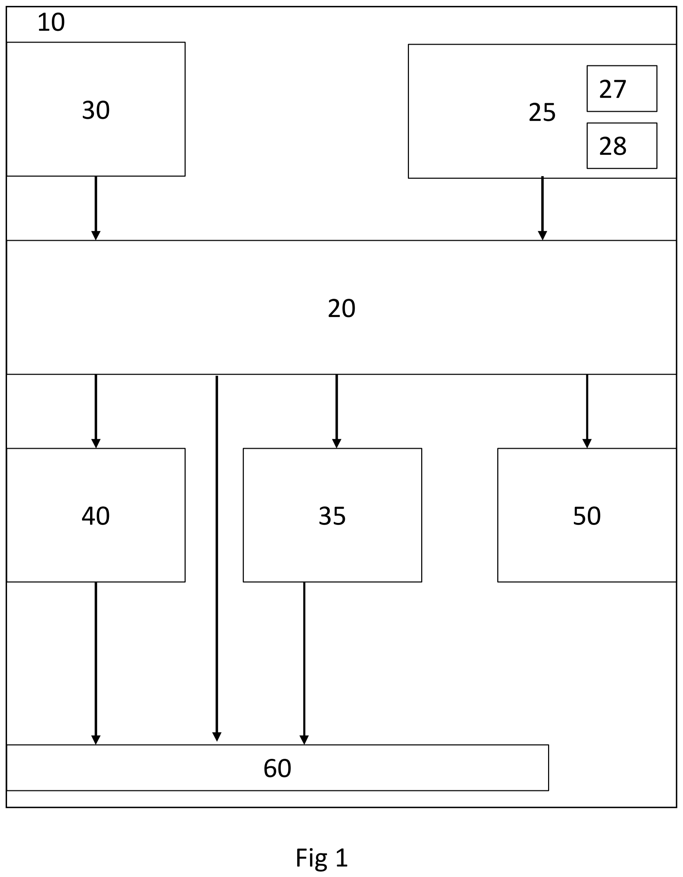

Fig. 1 shows an overview of a typical hybrid classical-quantum system which can be used for performing the method set out in this document. Fig. 1 shows an overview of a computing system 10 for implementing the method of this document. The computing system 10 is, for example, a hybrid quantum and classical system and comprises, in an example, a (classical) central processing unit 20 which is connected to a data storage unit 25 (i.e., one or more memory devices), and a plurality of input/output devices 30. The input/output devices 30 enable input of one or more images and an output of a result for the one or more of the images.

A graphics processing unit 35 for processing vector calculations and a field programmable gate array (FGPA) 40 for control logic that can also be connected to the central processing unit 20 is also present. A quantum processor 50 (also termed quantum accelerator) is connected to the classical central processing unit 20. In an alternative embodiment, the quantum processor 50 is emulated on a classical processor.

In one implementation of the computing system 10, the quantum processor 50 is a gate-based quantum processor. It is also possible to use a quantum processor 50. The quantum processor can be a quantum annealing system. The computing system 10 is connected to a computer network 60, such as the Internet. It will be appreciated that the computing system 10 of Fig. 1 is merely exemplary and other units or elements may be present in the computing system 10. It will also be appreciated that there may be many input/output (I/O) devices 30 located at multiple locations and that there may be a plurality of data storage units 25 also located at multiple locations. The many I/O devices 30 and data storage units 25 are connected by the computer network 60. The data storage units 25 may contain a learning model 27 and a training dataset 28.

The approach adopted in this document is to replace the classical Monte Carlo sampling method by a Quantum Amplitude Amplification followed by implementing a maximum likelihood algorithm using a variational quantum circuit.

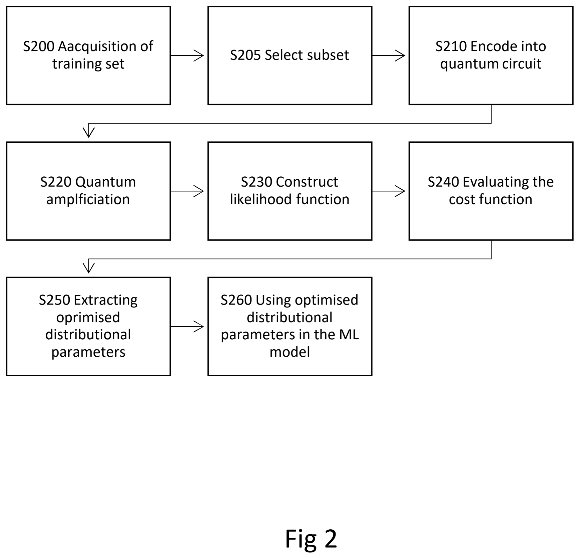

The method will now be outlined as shown in Fig. 2. In a first step S200, the training set 28 is acquired. It is necessary to establish the set of distributional (or model) parameters $\theta$ for which the cost function is a minimum. This would be done classically by a Monte Carlo technique to minimise the function $\mathcal{F}(\theta)$, as given above in Eqn. 3. The set of distributional parameters $\theta$ are the internal values that a machine learning model learns from the data during training and are representative of (but not necessarily equivalent to) the physical parameters. For example, in a travelling salesperson problem, the set of distributional parameters $\theta$ could represent the distance between locations and the time needed to travel between the locations and the distributional parameters learnt during the training can be used to calculate the salesperson's optimal route.

In order to reduce the burden of computation resources, the method set out in this document only uses a subset (or mini-batch) 28a of the training set, represented by the variable m, is selected in step S205. This selection is carried out by the classical processor 20. The members of the subset 28a can be selected stochastically (i.e. at random). The selection could also include a subset of any updated data.

Eqn. 4 can be rewritten as follows:

$$\tilde{\eta}_m \; = \; \nabla_\theta \mathbb{E}_{\mathrm{p(m,\theta)}}[f(\mathrm{m})] \qquad\qquad \text{Eqn. 5}$$

It will be appreciated that $m \in x$, i.e. that all members (m) of the mini-batch/subset 28a are members (x) of the (full or complete) training dataset 28 of the training data stored in the data storage units 25. It will be recalled that $f$(m) is the cost function.

The calculation of the gradient requires calculation of the value for a small change in the set of parameters $\theta$, i.e. $\theta \rightarrow \theta$ - $\varepsilon\tilde{\eta}_{m1}$ and $\theta \rightarrow \theta$ - $\varepsilon\tilde{\eta}_{m2}$ in which $m$1 and $m$2 are two members of the subset/mini-batch 28a. As noted above, the calculation for a complete set of values of the set of parameters $\theta$ would require extensive resources. However, rather than computing the gradient with respect to every parameter, the gradient can be calculated in a random direction.

$$\tilde{\eta}_m \; \approx \; \frac{\nabla_\theta \mathbb{E}_{\mathrm{p(m,\theta+\varepsilon\varDelta)}}[f(\mathrm{m})] - \nabla_\theta \mathbb{E}_{\mathrm{p(m,\theta-\varepsilon\varDelta)}}[f(\mathrm{m})]}{2\;\varepsilon\varDelta} \qquad \left(\text{Eqn. 6}\right)$$

The value of $\Delta \in \{+1, -1\}^n$.

The gradient can be calculated using the quantum processor 50. This requires the conversion of the classical data in the subset 28a to be converted into a quantum state using a feature map in step 207, as will be described below. The use of the quantum processor 50 means that it is only needed to compute two expectation values $\mathbb{E}_{\mathrm{p(m,\theta)}}$ rather than 2n sets of values, where n is the number of parameters in the subset/mini-batch 28a. This is a substantial improvement over traditional Monte-Carlo simulations in which the error is inversely proportional to the square root of the number of evaluations, i.e. error $\propto 1/\sqrt{M}$, where M is the number of evaluations (and is twice the number of parameters).

The objective function (i.e. cost function) can be encoded into a quantum circuit $\mathcal{A}$ implemented by the quantum processor 50 in step S210:

$$|\Psi\rangle = \mathcal{A}|0\rangle_{n+1} = \sqrt{a}\,|\psi_1\rangle|1\rangle] + \sqrt{1-a}\,|\psi_0\rangle|0\rangle \qquad (\text{Eqn. 7})$$

$$\equiv \sin(\phi_a|\psi_1\rangle|1\rangle + \cos t(\phi_a|\psi_0\rangle|0\rangle$$

The probability of the ancillary qubit in the $|1\rangle$ state then gives the Expectation value $\mathbb{E}$ .

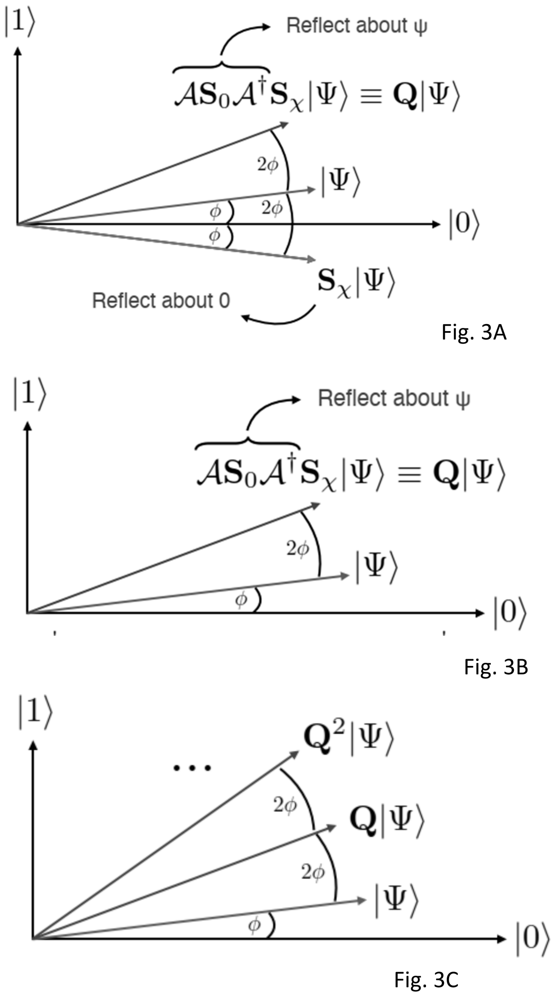

In one aspect of the invention, this probability can be increased in step S220 by the use of quantum amplification, as set out in Brassard et al "Quantum Amplitude Amplification and Estimation", https://arxiv.org/abs/quant-ph/0005055v1, 2 May 2000 (accessed 25 April 2024) and shown in Figs. 3A-3B. The use of the quantum amplitude amplification boosts quadratically the efficiency of computing of the gradients. In this case error $\propto$ 1/M. The quantum amplitude amplification amplifies the gradient, and a gradient's amplitude is measured.

It is known from Monte Carlo methods that, if a probabilistic algorithm $\mathcal{P}$ outputs a guess $\mathcal{P}$ (x) on input x, then the probabilistic algorithm $\mathcal{P}$ can be repeatedly calculated until a solution for the input x is found. If $X(x, \mathcal{P}(x))=1$ with probability *px>0,* it is therefore expected that repeating this calculation 1/px times will, on average, produce a satisfactory solution. This calculation can be implemented by the quantum algorithm $\mathcal{A}$ in a quantum circuit instead of using the probabilistic algorithm P.

The quantum algorithm $\mathcal{A}$ produces a quantum superposition $|\Psi_\varphi\rangle$ when the quantum algorithm $\mathcal{A}$ is run on input $\varphi,$ wherein $\varphi$ is an angle of a probability. This is illustrated in Fig. 3A.

The amplitude corresponds to square root of probabilities. It is therefore sufficient to repeat the amplitude amplification process by approximately $1/\sqrt{a_x}$ times to achieve the most probabilistic solution of the problem. In the classical Monte Carlo algorithm, the solution would be found after *N* evaluations of the function while the quantum amplitude approximation algorithm achieves the solution after $\sqrt{N}$ evaluations of the function. The probability of the ancillary qubit in one state gives the expectation value.

The goal of the quantum amplitude estimation is therefore to estimate the unknown parameter $\varphi$ contained in the wave function $|\Psi\rangle$ = sin $\varphi$ |good $\rangle$ + cos $\varphi$|bad $\rangle$, in which *good (state)* and *bad (state)* are given as the orthogonal state vectors.

Figs. 3A-3C shows quantum amplification boosting for the state $|\Psi\rangle$ having an angle $\phi$, as shown in Fig. 3A. The amplification process is realised by repeatedly applying a unitary operator Q on the state. Fig. 3A shows how the angle of probability $\varphi$ can be multiplied to increase the probability. The amplification process is realized by repeatedly applying a following unitary operator Q:

$$Q = Q\left(\mathcal{A}, \chi\right) = -\mathcal{A}S_0\mathcal{A}^\dagger S_\chi \qquad \text{(Eqn. 8)}$$

wherein $\mathcal{A}$ is the quantum algorithm/circuit, $\mathcal{A}^\dagger$ is the inverse of $\mathcal{A}$ , and an operator $S_x$ changes the sign from negative to positive of the amplitude of the quantum states:

$$|x\rangle \longmapsto \begin{cases} -|x\rangle & \text{if } \chi(x) = 1 \\ |x\rangle & \text{if } \chi(x) = 0, \end{cases} \qquad \text{(Eqn. 9)}$$

The operator *So* changes the sign of the amplitude if the state is the zero state $|0\rangle$. It should be understood that after applying the unitary operator Q for *m* times (with *2m* queries), it is possible to obtain the good state with a probability of a least 4$m^2$ times larger than with the classical estimation with 2m times. This results in the quadratic speedup obtained from the amplitude amplification.

$$\mathcal{A}\mathbf{S}_0\mathcal{A}^\dagger = \mathcal{A}(2|0\rangle\langle0|_{n+1} - \mathbb{I}_{n+1})\mathcal{A}^\dagger$$
$$= 2|\Psi\rangle\langle\Psi| - \mathbb{I}_{n+1} \qquad \text{(Eqn. 10)}$$

It is known from the prior art that repeatedly applying the unitary operator Q for m times on the wave function $|\Psi\rangle$ results in

$$\mathbf{Q}^m|\Psi\rangle = \sin((2m+1)\phi_a)|\psi_1\rangle|1\rangle + \cos((2m+1)\phi_a)|\psi_0\rangle|0\rangle \qquad \text{(Eqn.11)}$$

It is now necessary to estimate the value of $\varphi_a$ in Eqn. 11. The first stage is to make measurements of the good states and the bad states among the quantum state $Q^m|\Psi\rangle$ for the chosen subset 28a of {m}. If N is the number of measurements (shots) and h is the number of measured good states for the quantum state $Q^m|\Psi\rangle$, then likelihood function $L(h,f)$ is given:

$$|\Psi\rangle \rightarrow \text{measure} \quad h_0 \ \text{out of}\ N_0$$
$$\mathbf{Q}|\Psi\rangle \rightarrow \text{measure} \quad h_1 \ \text{out of}\ N_1$$
$$\mathbf{Q}^2|\Psi\rangle \rightarrow \text{measure} \quad h_2 \ \text{out of}\ N_2$$
$$\cdots$$

$$L_m(h_m, \phi) = p_m(\phi)^{h_m}[1 - p_m(\phi)]^{N_m - h_m}$$

$$p_m(\phi) = \sin^2((2m + 1)\phi)$$

$$L(\mathbf{h}, \phi) = \prod_{m=0}^{M} L_m(h_m, \phi) \qquad \hat{\phi} = \max_\phi L(\mathbf{h}, \phi)$$

The second stage of the amplitude estimation algorithm is to combine these Likelihood functions $L_m$ in the classical processor 20 to construct a single Likelihood function $L(h,\varphi)$.

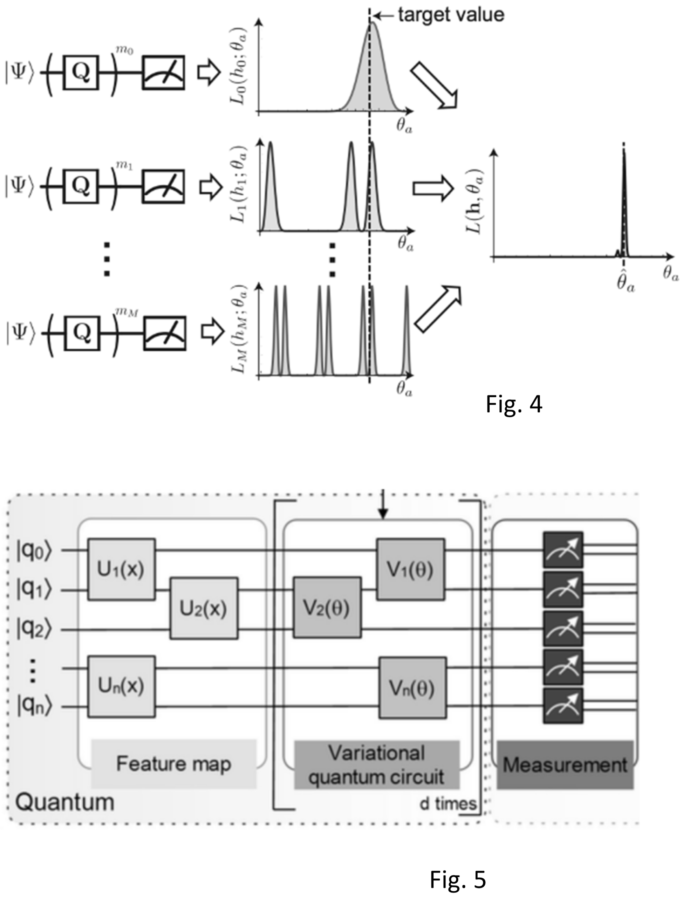

This procedure is summarised in Fig. 4 which shows a use of the amplitude estimation algorithm using the maximum likelihood estimation. When the quantum states Q are prepared, the numbers of measuring good states (h) are obtained as shown on the left part of Fig. 4. Based on the obtained h, the likelihood functions $L_m$ are therefore constructed. These are shown as multiple peaks on the centre of Fig. 4. A single likelihood function $L(h, \varphi_a)$ is established by combining the likelihood functions $L_m$ (right side of Fig. 4). The maximum likelihood algorithm estimates the values of h and phi $\varphi_a$ that maximize the likelihood function L. Superposing a plurality of the peaks on Fig. 4, as seen on the right-hand side, results in observation of one very sharp peak. This sharp peak corresponds to the gradient estimation. It will be appreciated that a and $\varphi$ are uniquely related through $a = \sin^2\varphi$ in the range $0 \leq \varphi \leq \pi/2$ and $\hat{a} := \sin2\varphi$ is the estimate for the value of a.

To implement the maximum likelihood algorithm, a variational quantum circuit is used as shown on Fig. 5. Fig. 5 shows the quantum circuit on the left in which the parameters $\theta$ are mapped as a feature map to a quantum circuit (in step S207) and the variational quantum circuit (VQC) in the middle. The parameters $\theta$ are mapped to trainable control parameters of the variational quantum circuit (VQC), e.g., rotation angles or coupling strengths of parameterized gates, so that the parameter $\theta$ determines the unitary transformations applied and will be iteratively updated to minimize the cost function (as described later). The measurements are carried out on the right-hand side. The variational quantum circuit evaluates the cost function and thus determines gradient of the quantum system.

To be more specific, the outcomes of the measurements in the variational quantum circuit are used to compute both the cost function f(x) and its gradient with respect to the parameters $\theta$ of the quantum circuit. The evaluation of this gradient allows to determine the direction in parameter space in which parameters $\theta$ should be changed, in order to keep lowering down the cost function.

The conversion of quantum values into classical values is performed by measuring the quantum states produced as outcomes by the variational quantum circuit (VQC). The measurements yield classical outcomes, such as bit strings or counts of measurement results, which are transferred to the classical processor 20. These outcomes are statistically processed in the step S250 to compute classical quantities, including expectation values, probabilities, likelihood values, cost-function values, or gradient estimates. The resulting classical quantities are then used by a classical optimisation routine executed on the classical processor 20 to perform optimization steps and to update the parameters of the machine learning model 27.

The update rule for updating the parameters $\theta$ may follow gradient-based optimization methods such as gradient descent, stochastic gradient descent, Adam, or other first- or higher-order optimization algorithms. In particular, the direction of the gradient determines whether the values of the parameters $\theta$ are increased or decreased, while a step size or learning rate determines the magnitude of the update. The parameters $\theta$ could correspond to the parameters in the unitary gates of the variational quantum circuit (VQC), amounting to qubit rotations.

The encoding of the values of the likelihood function $L(h, \varphi)$ in the quantum circuit is in step S210 and can be, for example, basic encoding, angle encoding, amplitude encoding. In one particular but not limiting example, the values of the function $L(h, \varphi)$ are encoded as y-rotations of the qubits. Other encodings could be, for instance, in the 0/1 values of measurements in the computational basis, in non-orthogonal single-qubit states, and also in other angles defining the qubit in the Bloch sphere, including also, if necessary, the radius in the Bloch sphere for mixed-state single-qubits.

The variational parameters $\theta$ are input inside qubit rotations. The feature map (learning data) is encoded in the variational quantum circuit (VQC). One of plurality qubits is encoded and the quantum circuit becomes variational with some rotations of the qubits inside the variational circuit. The rotation of the qubits is encoded by choosing a different value of the angle φ. By choosing the best angle φ, it is possible to obtain a qubit parity.

It will be noted that the variational parameters θ are introduced as trainable parameters of parameterized quantum gates in the variational quantum circuit (VQC) and are adjusted during the optimization process, as noted above. This use of the parameters θ is distinct from the feature-map encoding shown in Fig. 5, in which classical input data are encoded into the variational quantum circuit using fixed or data-dependent gate parameters that are not optimized. The variational parameters θ are also distinct from the encoding of the likelihood parameter φ. The likelihood parameter φ represents an estimated amplitude or probability value and is encoded to represent the outcome of the amplitude estimation process, for example via qubit rotations or measurement statistics.

In other words, the feature map encodes the input data, the parameters θ control and adapt the variational quantum circuit during optimization, and the parameter φ represents inferred likelihood information used for maximum-likelihood estimation.

Parity measurement (also referred to as operator measurement) is a procedure in used for error detection in quantum qubits. The parity measurement checks the equality of two qubits to return a true or false answer, which can be used to determine whether a correction needs to occur. Additional measurements can be made for a system greater than two qubits. Because parity measurement does not measure the state of singular bits but rather gets information about the whole state, it is considered an example of a joint measurement.

By using the parity measurement, it is possible to reduce a huge number of qubits to one qubit. The cost function is minus the parity of the ancillary qubit times the parity of output qubits. This information is then used to evaluate the direction of change of the parameters in the mode which could be for instance the parameters of unitary gates in the quantum circuit, or even the weight values of a neural network. This is then used to re-evaluate the next iteration of the method.

The variational quantum circuit is used to evaluate the cost function in step 240 and find the minimum of the cost function. The minimum of the cost function provides the optimised values of the distributional parameters from the training data subset 28a. These optimised values are extracted in step 250 can be used in step S260 to update the parameters in the machine learning model 27.

As noted above. the classical processor 20 updates in step 260 the relevant parameters according to a selected optimization rule, based on the evaluated cost function and its associated gradient or parity-based measurement outcome (as noted above). The updated parameters are then supplied back to the variational quantum circuit, which is re-executed using these updated parameter values to evaluate the cost function in step 240. This feedback process defines the next iteration of the method, and is repeated until a stopping criterion is met, such as convergence of the cost function or a predefined number of iterations.

The update of the parameters in step 260 may be applied to a subset of model parameters associated with the current training iteration, such as those parameters corresponding to a given layer, component, or mini-batch, rather than replacing all parameters of the model. The remaining parameters of the model may be retained from previous iterations.

REFERENCE NUMERALS

| | |
|---|---|
| 10 | Computing system |
| 20 | Central processing unit |
| 25 | Data storage unit |
| 27 | Learning model |
| 28 | Training dataset |
| 28a | Subset |
| 30 | Output devices |
| 35 | Graphics processing unit |
| 40 | Field programmable gate array |
| 50 | Quantum processor |
| 60 | Computer network |

**Claims**

1. A computer-implemented method for training a machine learning model (27) using a training dataset (28), having a set of distributional parameters θ, the method being implemented on a hybrid classical-quantum system (10) with a classical processor (20) and a quantum processor (50) the method comprising:

- inputting a subset (28a) from the training dataset (28);
- mapping (S207) the subset (28a) into quantum states $|\Psi\rangle$:
- calculating a gradient of the subset (28a) by encoding (S210) a cost function representative of the gradient into a variational quantum circuit ($\mathcal{A}$) implemented on the quantum processor (50), amplifying (S220) the amplitude of the quantum states $|\Psi\rangle$, constructing a likelihood function ($L(h,f)$) (S230), and minimising the cost function by the variational quantum circuit to optimise the distributional parameters 0;
- extracting (S250) the optimised distributional parameters; and
- entering (S260) the optimised distributional parameters into the machine learning model (27).

2. The method of claim 1, wherein the inputting of the subset from the training dataset (28) comprises selecting (S205) stochastically, using the classical processor (20), the subset (28a).

3. The method of claim 2, wherein the subset (28a) is randomly selected.

4. The method of any of claims 1 to 3, wherein the variational quantum circuit ($\mathcal{A}$) evaluates the cost function to optimise the distributional parameters $\theta$.

5. The method of any of claims 1 to 4 wherein the step (S250) of extracting the optimised distributional parameters comprises measuring outcomes of the variational quantum circuit ($\mathcal{A}$), processing the outcomes statistically in the classical processor (20) to compute classical quantities, and using the computed classical quantities to optimise the distributional parameters $\theta$.

6. The method of any of claims 1 to 5, wherein the amplifying (S220) is repeated a plurality of times.

7. The method of claim 6, wherein the number of times for repeating the amplifying (S220) is the inverse of the square root of the probabilities.

8. The method of any of the above claims, wherein the amplifying comprises applying, in the quantum processor (50), a unitary operator on the quantum circuit *(A)*.

9. The method of any of the previous claims, wherein a single likelihood function is constructed from multiple likelihood functions after performing an amplitude amplification/estimation algorithm.

10. A computing system (10) for training a machine learning model (27), comprising a classical processor (20) and a quantum processor (50), wherein

- the classical processor (20) is adapted to select a subset (28a) from a training dataset (28) and to update distributional parameters $\theta$ in the machine learning model; and
- the quantum processor (50) is adapted to map (S207) the subset (28a) into a plurality of quantum states $|\Psi\rangle$, to calculate a gradient of the subset (28a) by encoding (S210) a cost function representative of the gradient into a quantum circuit ($\mathcal{A}$), to amplify (S220) the amplitude of the quantum states $|\Psi\rangle$, to construct a likelihood function ($L(h,f)$) (S230), and to minimise the cost function in a variational quantum circuit in order to optimise the distributional parameters $\theta$.

11. A computer-program product which on running on a hybrid classical-quantum computer system (10) is configured to run the method of one of claims 1 to 9.

Fig 1

| S200 Aacquisition of training set | → | S205 Select subset | → | S210 Encode into quantum circuit |
|---|---|---|---|---|

| S220 Quantum amplficiation | → | S230 Construct likelihood function | → | S240 Evaluating the cost function |
|---|---|---|---|---|

| S250 Extracting oprimised distributional parameters | → | S260 Using optimised distributional parameters in the ML model |
|---|---|---|

Fig 2

Fig. 3A

Fig. 3B

Fig. 3C

Fig. 4

Fig. 5

| | Europäisches Patentamt European Patent Office Office européen des brevets | **EUROPEAN SEARCH REPORT** | **Application Number** EP 25 22 6974 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | RYAN SWEKE ET AL: "Stochastic gradient descent for hybrid quantum-classical optimization", ARXIV.ORG, CORNELL UNIVERSITY LIBRARY, 201 OLIN LIBRARY CORNELL UNIVERSITY ITHACA, NY 14853, 18 August 2020 (2020-08-18), XP081741289, * page 1 - page 23, paragraph 2 * * Appendices A and B * | 1-11 | INV. G06N10/60 G06N3/084 ADD. G06N3/045 |
| A | KIRILL PLEKHANOV ET AL: "Variational quantum amplitude estimation", ARXIV.ORG, CORNELL UNIVERSITY LIBRARY, 201 OLIN LIBRARY CORNELL UNIVERSITY ITHACA, NY 14853, 28 February 2022 (2022-02-28), XP091156320, * page 1 - page 8, right-hand column, paragraph 2 * | 1-11 | |
| A,D | Mohamed Shakir ET AL: "Monte Carlo Gradient Estimation in Machine Learning", , 29 September 2020 (2020-09-29), XP093283290, DOI: 10.48550/arXiv.1906.10652 Retrieved from the Internet: URL:https://arxiv.org/pdf/1906.10652 [retrieved on 2025-06-04] * the whole document * | 1-11 | TECHNICAL FIELDS SEARCHED (IPC) G06N |

-/--

The present search report has been drawn up for all claims

| Place of search | Date of completion of the search | Examiner |
|---|---|---|
| The Hague | 24 February 2026 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                    
& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 25 22 6974

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | Montanaro Ashley: "Quantum speedup of Monte Carlo methods", arXiv.org, 11 July 2017 (2017-07-11), XP093283289, DOI: 10.48550/arxiv.1504.06987 Retrieved from the Internet: URL:https://arxiv.org/pdf/1504.06987 [retrieved on 2025-06-04] * the whole document * ----- | 1-11 | |
| A | US 2023/104058 A1 (HOPFMUELLER FLORIAN [DE] ET AL) 6 April 2023 (2023-04-06) * abstract; claims 1-33; figures 1-7 * * paragraph [0053] - paragraph [0146] * ----- | 1-11 | |
| | | | **TECHNICAL FIELDS SEARCHED (IPC)** |

| The present search report has been drawn up for all claims | | |
|---|---|---|
| Place of search | Date of completion of the search | Examiner |
| The Hague | 24 February 2026 | Volkmer, Markus |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...........................................................................................
& : member of the same patent family, corresponding document

## ANNEX TO THE EUROPEAN SEARCH REPORT
## ON EUROPEAN PATENT APPLICATION NO.

EP 25 22 6974

24-02-2026

| Patent document cited in search report | | Publication date | Patent family member(s) | | Publication date |
|---|---|---|---|---|---|
| US 2023104058 | A1 | 06-04-2023 | AU | 2021285093 A1 | 08-12-2022 |
| | | | CA | 3177422 A1 | 09-12-2021 |
| | | | EP | 4162414 A1 | 12-04-2023 |
| | | | JP | 7818531 B2 | 20-02-2026 |
| | | | JP | 2023528881 A | 06-07-2023 |
| | | | US | 2023104058 A1 | 06-04-2023 |
| | | | WO | 2021243454 A1 | 09-12-2021 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 24383490

**Non-patent literature cited in the description**

- **SWEKE et al.** Stochastic gradient descent for hybrid quantum-classical optimization. *ArXiv.Org*, 18 August 2020
- **SHAKIR MOHAMED et al.** Monte Carlo Gradient Estimation in Machine Learning. *Journal of Machine Learning Research*, 2020, vol. 21
- **MONTANARO**. Quantum Speedup of Monte Carlo methods. *arXiv:1504.06987v3 [quant-ph*, 22 April 2024, https://doi.org/10.48550/arXiv.1504.06987
- **BRASSARD et al.** *Quantum Amplitude Amplification and Estimation*, 02 May 2000, https://arxiv.org/abs/-quant-ph/0005055v1